# EUROPÄISCHE PATENTSCHRIFT

(11) **EP 1 798 428 B1**
(45) Veröffentlichungstag und Bekanntmachung des Hinweises auf die Patenterteilung: **04.02.2009**
(21) Anmeldenummer: 06024891.1
(22) Anmeldetag: 01.12.2006
(51) Int. Cl.: F16C 7/02, B29C 70/86, B29L 31/06

(54) **Flechttechnisch hergestelltes Faserverbundbauteil**
Braided composite part
Pièce composite fabriquée par tressage

(30) Priorität: 13.12.2005 DE 102005059933
(43) Veröffentlichungstag der Anmeldung: 20.06.2007
(73) Patentinhaber: EADS Deutschland GmbH, 85521 Ottobrunn (DE)
(72) Erfinder: Filsinger, Jürgen, 83620 Feldkirchen-Westerham (DE); Havar, Tamas, 83104 Tuntenhausen (DE); Maidl, Franz, 94574 Wallerfing (DE); Schouten, Marinus, 83607 Holzkirchen (DE)

(56) Entgegenhaltungen:
- EP-A- 1 736 674
- EP-A1- 0 031 413
- DE-A1- 3 317 046
- DE-A1- 10 325 190
- DE-A1-1102004 017 31
- FR-A- 2 636 386
- FR-A1- 2 543 054
- GB-A- 2 082 716

## Beschreibung

### TECHNISCHES GEBIET

Die vorliegende Erfindung betrifft das technische Gebiet zumindest teilweise flechttechnisch hergestellter Faserverbundbauteile. Die Erfindung betrifft ein derartiges Faservertiundbauteil, insbesondere in Form einer Zug/Druck-Strebe. Außerdem betrifft die Erfindung ein Verfahren zum Herstellen derartiger Faserverbundbauteile sowie ein Luftfahrzeug mit solch einer Zug/Druck-Strebe oder mit einem Faserverbundbauteil, das unter Verwendung des erfindungsgemäßen Verfahrens hergestellt worden ist.

### HINTERGRUND DER ERFINDUNG

In der Luft- und Raumfahrttechnik sowie in der Fahrzeugtechnik werden bekanntlich Faserverbundbauteile zur Gewichtseinsparung eingesetzt. Zu diesem Zweck sind Bauweisen aus CFK (d.h. kohlenstofffaserverstärktem Kunststoff) entwickelt worden, um bisherige metallische Bauteile (Verbindungselemente, Querlenker etc.) durch Faserverbundbauteile zu ersetzen. So auch beim Airbus A340, bei dem gegenwärtig noch metallische Pendelstützen (engl. "rear links") zur Lagerung der Landeklappen zum Einsatz kommen, die jedoch ebenfalls zur Gewichtseinsparung durch CFK-Strukturen ersetzt werden sollen.

Ein derartiges CFK-Konzept kann beispielsweise auf der Verwendung entsprechend zugeschnittener und abgelegter Multiaxialgewebe basieren. Derartige Laminate können ggf. mit Bohrungen zur Aufnahme von Lagern oder Bolzen versehen werden.

Ein Faserverbundbauteil ist aus EP 1 736 674 A1 bekannt.

In der Druckschrift EP 0 398 841 A1 ist ein Beschleunigungshebel offenbart, der aus mehreren, aufeinander gelegten Schichten in Form von Prepreg- (eng). "pre impregnated") Materialien oder Halbzeugen aufgebaut ist, wobei die Schichten unterschiedliche Faserorientierungen aufweisen und im Wesentlichen parallel zu einer Bewegungsebene liegen.

Aus der Druckschrift DE 196 28 388 A1 ist ferner eine Zug/Druck-Strebe bekannt, die durch Ablegen von Verstärkungsfasern (z.B. Glasfasern) entsprechend einem vorgegebenen Legemuster und Fixierung mittels Sticken auf einem Vlies gebildet wird, wobei zusätzliche Z-Achsen-Verstärkungen vorgesehen sind. Nachteil derartiger mittels TFP (engl. "tailored fibre placement") hergestellter Bauteile ist jedoch, dass nur eine geringe Bauteildicke möglich ist, da der Stickuntergrund negative Auswirkungen auf die mechanischen Eigenschaften des Bauteiles hat, insbesondere aufgrund von Querkontraktionen bei Zug- bzw. Druckbelastung.

Zudem können derartige Zug/Druck-Streben mit entsprechenden Augen, Schlaufen, Ösen bzw. Durchgangsöffnungen, z.B. zur Lagerungen von Bolzen, durch einen Wickelprozess hergestellt werden. Allerdings kann dabei jeweils nur ein einzelnes Bauteil hergestellt werden und das Wickeln stellt einen aufwendigen Prozess dar. Zudem kann beim Winkeln mit Winkeln ungleich 0° eine ungenaue Ablage der Wickellagen (Überlappungen bzw. Lücken) auftreten, was wiederum die mechanischen Eigenschaften des Bauteils negativ beeinflusst.

Problematisch bei derartigen Faserverbundbauteilen ist generell eine optimale Auslegung hinsichtlich der aufzunehmenden Lasten (insbesondere der Zug- und Druckkräfte).

### DARSTELLUNG DER ERFINDUNG

Es ist eine Aufgabe der vorliegenden Erfindung, ein gewichtsreduziertes Faserverbundbauteil mit optimierter Lastaufnahme zu schaffen, um entsprechende bisher verwendete metallische Bauteile zu ersetzten. Eine weitere Aufgabe besteht darin, ein Verfahren zu schaffen, mit dem derartige Faserverbundbauteile in effektiver Weise und damit kostengünstig hergestellt werden können.

Die oben genannte Aufgabe wird gemäß einem ersten Aspekt der Erfindung durch ein Faserverbundbauteil, insbesondere eine Zug/Druck-Strebe, mit den Merkmalen des Anspruchs 1 gelöst. In davon abhängigen Ansprüchen sind vorteilhafte Ausgestaltungen der Erfindung angegeben.

Das erfindungsgemäße Faserverbundbauteil besteht aus einem Faserverbund-Halbzeug, umfassend ein Kernelement, welches zumindest eine konkav ausgebildete Stirnseite aufweist, an die sich eine Durchgangsöffnung anschließt, wobei jeweils gegenüberliegende Quer- oder Längsseiten des Kernelements sowie die nicht von dem Kernelement begrenzte Seite der Durchgangsöffnung schlaufenartig von einem Faserverbund-Element umschlossen sind, wobei das Faserverbund-Element ein in einer Richtung senkrecht zu den Quer- oder Längsseiten geflochtenes Faserverbund-Element ist. Das Faseverbund-Halbzeug ist abschließend zur Bildung des fertigen Faserverbundbauteils auf bekannte Art und Weise mit einem Harzsystem infiltriert und ausgehärtet.

Unter dem Begriff "konkav" ist dabei ganz allgemein eine vertiefte Ausgestaltung zu verstehen, d.h. die konkav ausgebildete Stirnseite kann z.B. nach innen gewölbt sein. Die Form der Stirnseite muss jedoch nicht zwangsweise gekrümmt sein, sondern kann beispielsweise auch eine eckige Form aufweisen. Zweckmäßigerweise ist die Form der Durchgangsöffnung jedoch an die Form der jeweiligen Stirnseite angepasst.

Durch einen derartigen Aufbau wird ein Faserverbundbauteil mit im Vergleich zu entsprechenden metallischen Bauteilen reduziertem Gewicht geschaffen, das zudem zur Lastenaufnahme dahingehend optimiert ist, dass die Druckkräfte durch das Kernelement und die Zugkräfte durch das schlaufenartig angeordnete, geflochtene Faserverbund-Element aufgenommen werden. Durch die Verwendung der Flechttechnik, insbesondere der Rundflechttechnik, wie sie beispielsweise in der unveröffentlichten deutschen Patentanmeldung DE 10 2004 beschrieben ist, und deren Inhalt auch Bestandteil dieser Beschreibung sein soll, ist das Faserverbundbauteil ohne größeren Verlust der mechanischen Eigenschaften herstellbar.

Vorzugsweise weist die zumindest eine konkav ausgebildete Stirnseite einen vorgegebenen Krümmungsradius auf, an den sich eine im Wesentlichen kreisförmig ausgebildete Durchgangsöffnung vorzugsweise kontinuierlich, d.h. ohne Spalte oder Schlitze, anschließt, und das geflochtene Faserverbund-Element umgibt dann das Kernelement und die Krümmungsachse der Konkavität schlaufenförmig.

Gemäß einer besonders bevorzugten Ausführungsform schließt sich an die zumindest eine konkav ausgebildete Stirnseite des Kernelements ein Innenelement zur Bildung der entsprechenden Durchgangsöffnung an, wobei die Form (z.B. der Krümmungsradius) des Innenelementes an die Form (bzw. die Krümmung) der zumindest einen konkav ausgebildeten Stirnseite angepasst ist, und das Kernelement und die Außenumfangsfläche des Innenelements schlaufenartig von dem geflochtenen Faserverbund-Element umschlossen sind. Dabei gewährleistet die formangepasste Ausgestaltung von konkav ausgebildeter Stirnseite und entsprechendem Innenelement einen kontinuierlichen, bündigen Übergang ohne Spalte, Schlitze, Lufteinschlüsse bzw. Hohlräume. Letztere würden beim Imprägnieren des Faserverbund-Halbzeuges zu ungewollten und nachteiligen Harzanhäufungen führen. Die Verwendung eines derartigen Innenrings ermöglicht zudem eine bessere Einleitung von Kräften in das Kernelement. Zudem kann der Innenring auf einfache Weise bearbeitet werden, z.B. durch Fräsen einer Passbohrung für ein aufzunehmendes Lager.

Vorteilhafterweise besteht das Innenelement aus einem Faserverbundmaterial, dass z.B. in Form von Prepreg-Lagen oder trockenen Halbzeugen um ein entsprechendes Halteelement gelegt oder angeordnet wird, was nachstehend noch genauer beschrieben wird. Das Innenelement kann aber auch durch einen Wickelprozess hergestellt sein. Besonders bevorzugt wird jedoch ein geflochtener Faserverbundschlauch-Abschnitt aus Kohlenstoff-, Glas- und/oder Aramid-Fasern verwendet, der ebenfalls mit der oben genannten Rundflechttechnik hergestellt werden kann.

Das zur Aufnahme von Druckkräften ausgelegte Kernelement ist vorzugsweise quaderförmig ausgebildet und weist entsprechende Längs- und Querseiten auf, wobei bei konkav gekrümmten Stirnseiten die Krümmungsachse der Konkavität vorzugsweise senkrecht zu den Längsseiten verläuft. Ebenso kann die Krümmungsachse der Konkavität auch eine andere Orientierung aufweisen (z.B. senkrecht zu den Querseiten des Kernelements). Selbstverständlich können auch würfelförmige, zylinderförmige, kegelförmige, pyramidenförmige oder Kernelemente mit einer anderen geometrischen Form verwendet werden. Dabei können die jeweiligen Stirnseiten entweder einseitig oder beidseitig eine vertiefte Ausgestaltung aufweisen. Die beiden Stirnseiten können selbstverständlich auch unterschiedlich ausgebildet sein.

Da die von dem Kernelement aufzunehmenden Druckkräfte im Vergleich zu den aufzunehmenden Zugkräften gering sind, kann das Kernelement zur Gewichtseinsparung als Sandwich aufgebaut werden. Vorteilhafterweise besteht das Kernelement aus einem Schaumkern, der unter Bildung einzelner Flechtlagen umflochten ist. Der Schaumkern kann aus einem PU-Schaum oder anderen üblichen Schaumwerkstoffen bestehen.

Vorteilhafterweise umschließen die Flechtlagen den Querschnitt des Schaumkerns konzentrisch bzw. zwiebelartig. Dies wird dadurch erzielt, dass der Schaumkern in dessen Längsrichtung umflochten wird, so dass die Quer- und Längsseiten mit Flechtlagen bedeckt sind.

Besonders bevorzugt wird der Schaumkern unter Flechtwinkeln von ±45° unidirektional umflochten. Dies kann z.B. mit der eingangs genannten Rundflechttechnik erfolgen, wobei beim Flechten einer ersten Lage Kohlenstoff-, Glas- und/oder Aramidfasern als Verstärkungsfäden unter einem Winkel von +45° und Grilon®- und/oder Glasfasern als Stützfäden unter einem Winkel von -45° verflochten werden. Die Orientierung des Geflechts wechselt dann beim Flechten der nächsten Lage, d.h. die Stützfäden weisen eine Orientierung von +45° und die Verstärkungsfäden eine Orientierung von -45° auf. Selbstverständlich können auch andere Flechtwinkel verwendet werden.

Zwischen den einzelnen Flechtlagen können zumindest die Längsseiten des Kernelements bedeckende Faserverbund-Gewebe angeordnet sein, die ebenso beispielsweise aus Kohlenstoff-, Glas- und/oder Aramid-Fasern bestehen und vorzugsweise eine Orientierung von 0°, 45° oder 90° aufweisen. Das Faserverbund-Gewebe bewirkt, dass hohe Druckkräfte besser aufgenommen werden können, und dient demnach als Verstärkung.

Alternativ kann das erfindungsgemäße Faserverbundbauteil ein Kernelement aufweisen, das aus entsprechend zugeschnittenen und gestapelten Prepreg-Lagen oder trockenen Halbzeugen besteht und quasi in Handarbeit herstellbar ist. Dabei werden Lagen mit Orientierungen von 0°, 45° bzw. 90° bevorzugt. Ein derartiges Kernelement lässt sich einfach herstellen (z.B. auch in Multi-Bauteil-Fertigung) und weist ein äußerst geringes Gewicht auf.

Um eine optimale Aufnahme der Zugkräfte durch das das Kernelement sowie die zumindest eine Durchgangsöffnung bzw. das zumindest eine Innenelement schlaufenartig umgebende Faserverbund-Element zu gewährleisten, ist das geflochtene Faserverbund-Element in einer Richtung senkrecht zur Längsrichtung des Kernelementes, oder, je nach Anwendung, in einer Richtung senkrecht zur Querrichtung des Kernelements geflochten, vorzugsweise unter Flechtwinkeln von ±85° bezüglich dieser Richtungen. Generell ist ein steiler Flechtwinkel, d.h. ein größerer Winkel bzgl. der Flechtrichtung vorteilhaft, um Spannungen in den Flechtfasern besser aufnehmen zu können. Die Flechtfasern haben dann im Wesentlichen die Orientierung der Last und werden optimal ausgenutzt. Zum Flechten werden wiederum vorzugsweise Kohlenstoff-, Glas- und/oder Aramid-Fasern verwendet, wobei ggf. auch hier Glasfaser- und/oder Grilon^{®}-Stützfäden zum Einsatz kommen.

Die der Erfindung zugrunde liegende technische Aufgabe wird gemäß einem zweiten Aspekt durch ein Verfahren mit den Merkmalen des Anspruchs 16 gelöst. In davon abhängigen Ansprüchen sind vorteilhafte Ausgestaltungen der Erfindung angegeben.

Zum Herstellen von erfindungsgemäßen Faserverbundbauteilen werden mehrere Kernelemente mit jeweils zumindest einer konkav ausgebildeten Stirnseite sowie zumindest ein Halteelement benötigt, wobei die jeweils zumindest eine konkav ausgebildete Stirnseite an die Form des entsprechenden Halteelements angepasst ist. In einem ersten Schritt werden mehrere Kernelemente derart stapelförmig angeordnet, dass die jeweils zumindest eine konkav ausgebildete Stirnseite unter Anschmiegen an das entsprechende Halteelement an dieses angelegt wird. Anschließend wird diese Anordnung aus stapelförmig angeordneten Kernelementen und dem zumindest einen Halteelement fixiert, ggf. mittels Abstandshalter. In einem weiteren Schritt wird die fixierte Anordnung beispielsweise in eine Rundflechtmaschine eingespannt und zur Bildung eines die Kernelemente und das zumindest eine Halteelement schlaufenartig umschließenden Faserverbund-Elements umflochten. Danach wird die umflochtene Anordnung infiltriert und ausgehärtet. Anschließend wird das zumindest eine Halteelement ggf. mittels Kälteeinwirkung entformt und abschließend werden die umflochtenen, gestapelten Kernelemente voneinander mittels Schneiden, Sägen oder Fräsen getrennt, um separate Faserverbundbauteile, die jeweils ein Kernelement aufweisen, zu erhalten.

Auf diese Weise können mehrere Faserverbundbauteil gleichzeitig hergestellt werden, die lediglich im letzten Bearbeitungsschritt mittels Schneiden, Sägen oder Fräsen voneinander getrennt werden. Dies stellt ein besonders effektives Herstellungsverfahren dar, da bei anderen Techniken in der Regel jeweils nur ein einzelnes Bauteil gefertigt werden kann.

Gemäß einem bevorzugten Verfahren wird vor dem stapelförmigen Anordnen der Kernelemente das zumindest eine Halteelement mit Faserverbundmaterial überzogen, so dass beim stapelförmigen Anordnen der Kernelemente sich die jeweils zumindest eine konkav ausgebildete Stirnseite an das Faserverbundmaterial des entsprechenden Halteelements anschmiegt.

Bevorzugt wird hierfür ein geflochtener Faserverbund-Schlauch verwendet, der vor dem Stapeln bzw. Anlegen der Kernelemente über das zumindest eine Halteelement strumpfartig gezogen wird. Dieser Faserverbund-Schlauch kann wiederum mit der eingangs genannten Rundflechttechnik unter Verwendung von Kohlenstoff-, Glas- und/oder Aramid-Fasern (ggf. mit entsprechenden Stützfäden) hergestellt werden. Das Halteelement kann jedoch auch durch Umwickeln oder Umlegen entsprechender Fasern oder Geweben mit Faserverbundmaterial versehen werden. In manchen Fällen ist es vorteilhaft, das Faserverbundmaterial nach dem Aufbringen auf das Halteelement zu kompaktieren, d.h. zu verdichten, und/oder auszuhärten.

Zur Gewichtsreduzierung, wie bereits voranstehend erwähnt, wird zur Bildung des Kernelementes ein Schaumkern mit einzelnen Flechtlagen umflochten und anschließend vorkompaktiert. Typischerweise wird der Schaumkern in dessen Längsrichtung unter Flechtwinkeln von ±45°unter Verwendung von Kohlenstoff-, Glas- und/oder Aramid-Fasern (und ggf. Glasfaser- und/oder Grilon^{®}-Stützfäden) umflochten. Dabei können zwischen den einzelnen Flechtlagen Faserverbund-Gewebe aus Kohlenstoff-, Glas- und/oder Aramid-Fasern angeordnet werden, vorzugsweise mit einer Orientierung von 0°, 45° oder 90°.

Neben den, wie oben beschrieben, hergestellten Kernelementen, bestehend aus umflochtenen Schaumkernen, können zusätzliche Kernelemente hergestellt werden, bei denen der Schaumkern vor dem Umflechten mit einer Trennfolie umgeben wird. Diese Trennfolie kann beispielsweise eine Teflon^{®}-Folie sein, die vorgesehen wird, um ein späteres Trennen der einzelnen Faserverbundbauteile zu erleichtern. Kernelemente mit einer den Schaumkern umgebenden Trennfolie werden nachfolgend auch als "Verlustkerne" bezeichnet.

Die voranstehend beschriebenen Kernelemente, einschl. den sogenannten Verlustkernen, können quasi als Endlosmaterial hergestellt werden und anschließend auf das erforderliche Maß zugeschnitten und vorkompaktiert werden. Danach wird die zumindest eine Stirnseite bevorzugt mittels Ultraschallmesser bearbeitet. Diese Technik führt zu besseren Schnittflächen z.B. im Vergleich zu Ausstanzverfahren, da bei letzterem der Schaumkern lokal zusammengedrückt wird. Durch das Herstellen von Endlosmaterial wird vorteilhafter die Effizienz des Herstellungsprozesses gesteigert, da quasi mehrere Kernelemente in einem Arbeitsschritt umflochten werden.

Beim stapelförmigen Anordnen der Kernelemente kann unterschiedlich vorgegangen werden. Entweder werden Kernelemente, deren Schaumkerne nicht mit einer Trennfolie umgeben sind, abwechselnd mit Verlustkernen derart benachbart angeordnet, dass benachbarte Längsseiten von Kernelementen und Verlustelementen jeweils in Kontakt miteinander sind, oder es werden nur Kernelemente ohne den Schaumkern umgebende Trennfolie verwendet, wobei dann zwischen benachbarten Längsseiten der Kernelemente jeweils Trennfolien angeordnet werden. Die Trennfolie dient dazu, abschließend die einzelnen, jeweils ein Kernelement enthaltenden Faserverbundbauteile besser voneinander trennen zu können.

Nach dem Stapeln bzw. Anordnen der Kernelemente (bzw. der Kernelemente und Verlustkerne) unter zu Hilfenahme des zumindest einen Haltelements, wird diese Anordnung ggf. mittels Abstandshalter fixiert, um sie nachfolgend zu umflechten. Vorzugsweise erfolgt dies wiederum mittels Rundflechttechnik, wobei die Anordnung derart in einer Rundflechtmaschine angeordnet wird, dass in Richtung der Längsachse des zumindest einen Halteelements geflochten wird. Dabei ist ein steiler Flechtwinkel vorteilhaft, damit die Spannungen in den Flechtfasern besser aufgenommen werden können. Bevorzugt wird ein Flechtwinkel von ±85° bezüglich der Flechtrichtung bzw. Längsachse des zumindest einen Halteelements verwendet. Selbstverständlich können auch andere Flechtwinkel verwendet werden. Zum Umflechten werden wiederum typischerweise Kohlenstoff- , Glas- und/oder Aramid-Fasern verwendet, wobei die Welligkeit des Geflechts dadurch reduziert werden kann, dass zusätzlich Stützfäden aus Glas- und/oder Grilon^{®}-Fasern verwendet werden.

Die so umflochtene Anordnung wird anschließend typischerweise mittels Harz-Vakuum-Infiltrations-Verfahren (z.B. RTM- (engl. "resin transfer moulding") oder VAP- ("engl. Vacuum assisted process) Verfahren) infiltriert und ausgehärtet. Die Aushärtetemperaturen variieren dabei je nach verwendetem Harzsystem. Typischerweise liegen die Aushärtetemperaturen in einem Bereich von 100 - 200 °C. Danach wird das zumindest eine Halteelement ggf. nach Kälteeinwirkung entfernt.

Abschließend wird die Anordnung zum Separieren der einzelnen Faserverbundbauteile getrennt. Je nach dem ob nur Kernelemente ohne den Schaumkern umgebende Trennfolie verwendet wurden oder Kernelemente und Verlustkerne alternierend stapelförmig angeordnet wurden, erfolgt dieser Trennschritt unterschiedlich. Im ersten Fall erfolgt das Schneiden, Sägen oder Fräsen entlang der zwischen den einzelnen Kernelementen angeordneten Trennfolien. Bei alternierend gestapelten Kernelementen und Verlustkern, wird jeweils der Verlustkern "geopfert", da dieser in dessen Längsrichtung durchgeschnitten wird.

Das erfindungsgemäße Faserverbundbauteil findet beispielsweise als Verbindungselement, Zug/Druck-Strebe, Pendelstütze oder Querlenker in der Luft- und Raumfahrttechnik (z.B. in Flugzeugen oder Hubschraubern) bzw. in der Kraftfahrzeugtechnik Einsatz.

Eine besonders bevorzugte Anwendung des erfindungsgemäßen Faserverbundbauteils ist die Lagerung von Landeklappen, insbesondere zur hinteren Lagerung von Flugzeug-Landeklappen.

### KURZE BESCHREIBUNG DER ZEICHNUNGEN

Im Folgenden wird die Erfindung unter Bezugnahme auf die beigefügten Zeichnungen exemplarisch erläutert, in denen zeigt:
- **Fig. 1a**: eine schematische Schnittansicht eines erfindungsgemäßen Faserverbundbauteils;
- **Fig. 1b**: eine Querschnittsansicht des in Fig. 1a dargestellten Faserverbundbauteils entlang der Linie A1 - A1;
- **Fig. 1c**: eine schematische, dreidimensionale Darstellung eines bevorzugten Kernelements;
- **Fig. 2**: eine geschnittene, dreidimensionale Ansicht eines erfindungsgemäßen Faserverbundbauteils;
- **Fig. 3a**: eine Querschnittsansicht eines Kernelementes zur Erläuterung seiner Herstellung;
- **Fig. 3b**: eine Querschnittsansicht eines sogenannten Verlustkerns;
- **Fig. 4**: eine schematische Ansicht zur Erläuterung des stapelförmigen Anordnens von Kernelementen entlang entsprechender Halteelemente;
- **Fig. 5**: eine schematische Querschnittsansicht von stapelförmig angeordneten Kernelementen;
- **Fig. 6**: eine in eine Rundflechtmaschine eingespannte Anordnung aus stapelförmig angeordneten Kernelementen und entsprechenden Halteelementen zum Erläutern des Umflechtens dieser Anordnung; und
- **Fig. 7**: eine schematische Schnittansicht einer Landeklappe mit einem erfindungsgemäßen Faserverbundbauteil in Form einer Pendelstütze.

In den Figuren sind gleiche oder ähnliche Komponenten mit identischen Bezugsziffern bezeichnet. Die Darstellungen in den Figuren erläutern das erfindungsgemäße Faserverbundbauteil rein schematisch und können teilweise nicht maßstäblich sein.

### BESCHREIBUNG DER BEISPIELHAFTEN AUSFÜHRUNGSFORMEN DER ERFINDUNG

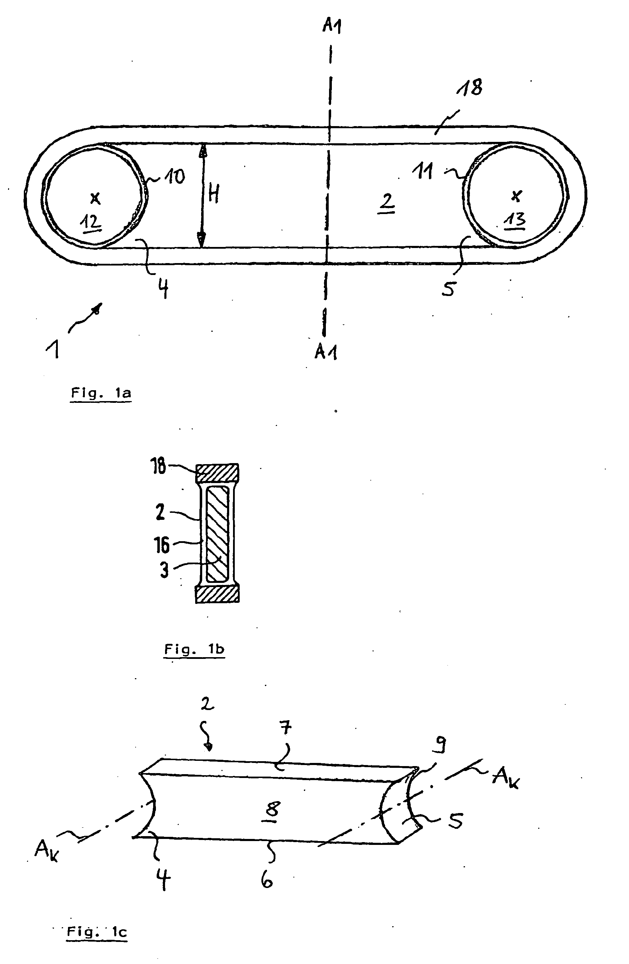

Fig. 1a zeigt eine bevorzugte Ausführungsform des erfindungsgemäßen Faserverbundbauteils 1. Das Faserverbundbauteil 1 umfasst ein Kernelement 2, dessen Stirnseiten 4, 5 mit einem vorgegeben Krümmungsradius konkav ausgebildet sind. Dies ist auch Fig. 1c zu entnehmen, in der in schematischer dreidimensionaler Darstellung ein quaderförmiges Kernelement 2 mit entsprechenden Querseiten 6, 7 und Längsseiten 8, 9 gezeigt ist. Die Krümmungsachse der Konkavität Aₖ verläuft dabei senkrecht zu den Längsseiten 8, 9 und ist in Fig. 1c strichpunktiert dargestellt. Entsprechend steht die Krümmungsachse der Konkavität Aₖ senkrecht zu der Zeichenebene von Fig. 1a, was mit der Markierung "x" zum Ausdruck kommen soll.

Wie in Fig. 1 a dargestellt ist, schließen sich an die Stirnseiten 4, 5 jeweils in formangepasster Weise ringförmige Innenelemente 10 bzw. 11 an. Unter dem Begriff "formangepasst" soll verstanden werden, dass zwischen dem Innenelement 10, 11 und der konkav ausgebildeten Stirnseite 4 bzw. 5 ein kontinuierlicher, bündiger Übergang besteht, was beispielsweise dadurch erzielt wird, dass der Radius der Konkavität und der Radius des entsprechenden Innenelementes einander entsprechen. Auf diese Weise wird ein formschlüssiger Übergang, d.h. ein Übergang ohne Spalte, Schlitze, Hohlräume etc., erzielt. Selbstverständlich kann der Radius des Innenelements 10 von dem des Innenelements 11 verschieden sein, aber der Radius der Stirnseite 4 wird an den Radius des Innenelements 10 und der Radius der Stirnseite 5 wird an den des Innenelements 11 angepasst sein. Bei dem in Fig. 1a dargestellten Faserverbundbauteil 1 sind die Radien der Stirnseiten 4, 5 identisch, und der Außenumfang der Innenelemente 10, 11 schließt bündig mit den Querseiten 6, 7 des Kernelements 2 ab, d.h. der Außendurchmesser der Innenelemente 10, 11 entspricht der Höhe H des Kernelements 2.

Die ringförmigen Innenelemente 10, 11, durch die entsprechende Durchgangsöffnungen 12 bzw. 13 gebildet werden, bestehen bevorzugt aus einem Geflechtsschlauch-Abschnitt aus Kohlenstoff-, Glas- und/oder Aramid-Fasern, was nachstehend noch genauer beschrieben wird. Alternativ können die Innenelemente 10, 11 auch mittels Wickeltechnik aus diesen Fasern hergestellt werden, oder aus Prepreg-Materialien bzw. trockenen Halbzeugen.

Das Kernelement 2 sowie die Innenelemente 10, 11 sind derart von dem geflochtenen Faserverbund-Element 18 umgeben, dass die nicht von der jeweiligen konkav ausgebildeten Stirnseite 4, 5 umgebene Seite der Innenelemente 10 bzw. 11 von dem geflochtenen Faserverbund-Element 18 umschlossen ist. Das in Richtung der Krümmungsachse der Konkavität Aₖ geflochtene Faserverbund-Element 18 schmiegt sich dabei an die Querseiten 6, 7 des Kernelements 2 und an die Außenumfangsflächen der Innenelemente 10, 11 kontinuierlich an. Auch hier kann zum Flechten des Faserverbund-Elements 18 die oben genannte Rundflechttechnik verwendet werden, mit Verstärkungsfäden aus Kohlenstoff-, Glas- und/oder Aramid-Fasern und ggf. Stützfäden aus Grilon^{®}-und/oder Glasfasern.

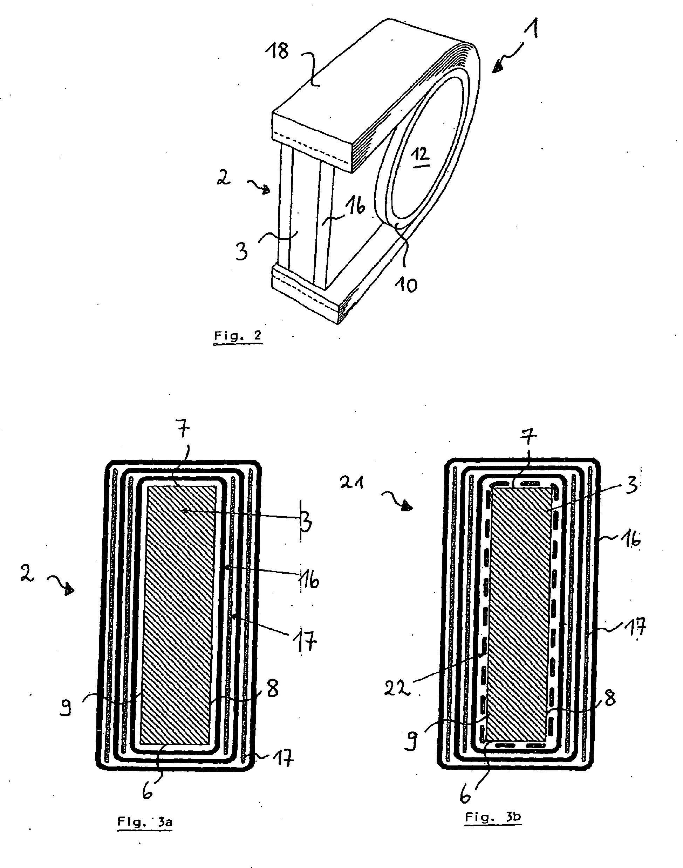

Das Kernelement 2 besteht aus einem Schaumkern 3 (Fig. 1 b), der derart umflochten ist, dass dessen Querschnitt im Wesentlichen konzentrisch von einzelnen Flechtlagen 16 umgeben ist. Hierzu wird der Schaumkern 3 in dessen Längsrichtung (d.h. senkrecht zur Zeichenebene von Fig. 1b) umflochten. Das Umflechten kann wiederum mit der Rundflechttechnik unter Verwendung von Kohlenstoff-, Glas- und/oder Aramid-Fasern als Verstärkungsfasern und ggf. Grilon®- und/oder Glasfasern als Stützfasern hergestellt werden. Zwischen den einzelnen Flechtlagen 16 können Faserverbund-Gewebe 17 angeordnet werden, was nachstehend im Zusammenhang mit Fig. 3a und 3b noch genauer beschrieben wird.

Alternativ kann auch ein Kernelement verwendet werden, das aus geschnittenen und gestapelten Prepreg-Materialien oder trockenen Halbzeugen aufgebaut ist. Hierauf soll jedoch nachfolgend nicht in näheren Einzelheiten eingegangen werden.

Fig. 2 zeigt eine schematische, dreidimensionale Querschnittsansicht einer Faserverbundschlaufe 1, wobei lediglich das Innenelement 10 zur Bildung der Durchgangsöffnung 12 dargestellt ist. Sowohl der mit Flechtlagen 16 umflochtene Schaumkern 3 als auch das das Kernelement 2 und den Außenumfang des Innenelements 10 umschließende, geflochtene Faserverbund-Element 18 sind schematisch dargestellt. Aufgrund des gewählten Flechtkonzeptes dient das Kernelement 2 als Druckstück, d.h. zur Aufnahme von Druckkräften, und das geflochtene Faserverbund-Element 18, welches auch als Schlaufenteil bezeichnet wird, ist zur optimalen Aufnahme von Zugkräften konzipiert. Da die aufzunehmenden Druckkräfte im Gegensatz zu den Zugkräften gering sind, kann das Kernelement 2 als Sandwich (d.h. umwickelter Schaumkern), wie oben geschildert, aufgebaut sein, was zu einer erheblichen Gewichtseinsparung führt. Zur Aufnahme von Zug- und Druckkräften können in die Durchgangsöffnungen 12 bzw. 13 beispielsweise Lager zur Aufnahme entsprechender Bolzen eingeführt sein, was hier aber nicht dargestellt ist.

Voranstehend wurde das erfindungsgemäße Faserverbundbauteil in symmetrischer Ausgestaltung dargestellt, d.h. mit beidseitig vorgesehenen Durchgangsöffnungen 12, 13 (s. Fig. 1a) zur Aufnahme entsprechender Bolzen. Selbstverständlich ist auch eine asymmetrische Anordnung mit beispielsweise nur einer Durchgangsöffnung möglich. Die konkave Ausbildung der Stirnseiten 4, 5 ist selbstverständlich nicht auf die beschriebene gekrümmte Form beschränkt. Die vertiefte Ausgestaltung der Stirnflächen kann beispielsweise auch eine eckige (z.B. dreieckige, rechteckige, vieleckige) Form aufweisen. Darüber hinaus können auch Kernelemente, die eine nicht-quaderförmige Form aufweisen, verwendet werden; d.h. es können auch würfelförmige, zylinderförmige, kegelförmige, pyramidenförmige oder andersförmige Kernelemente verwendet werden.

Im Folgenden soll das Verfahren zum Herstellen von erfindungsgemäßen Faserverbundbauteilen beschrieben werden. Hierzu zeigt Fig. 3a ein Kernelement 2 in Querschnittsansicht. Die Quer- und Längsseiten sind, wie in Fig. 1c, mit Bezugsziffern 6, 7 bzw. 8, 9 bezeichnet. Das quaderförmige Kernelement 2 besteht aus einem Schaumkern 3 (z.B PU-Schaum), dessen Querschnitt im wesentlichen konzentrisch von den einzelnen Flechtlagen 16 umgeben ist. Die Flechtlagen 16 werden durch Umflechten des Schaumkerns 3 in dessen Längsrichtung, die senkrecht zur Zeichenebene von Fig. 3a und 3b verläuft, erzeugt, wobei die Flechtlagen bevorzugt unter Winkeln ±45° abgelegt werden. Als Flechtfasern werden bevorzugt Kohlenstoff-, Glas- und/oder Aramid-Fasern verwendet. Wird das in DE 102004017311 beschriebene Rundflechtverfahren verwendet, können zusätzlich Grilon®- und/oder Glasfasern als Stützfäden verwendet werden. Beim Flechten werden in einer ersten Lage beispielsweise Verstärkungsfasern unter +45° und Stützfäden unter -45° verflochten. In der nächsten Lage wechselt dann die Orientierung des Geflechtes; d.h. die Verstärkungsfasern werden unter einem Winkel von -45° und die Stützfäden unter einem Winkel von +45° abgelegt. Werden z.B. Kohlenstofffasern und Grilon®-Stützfäden verwendet, liegt der Anteil der Kohlenstofffasern im Vergleich zu den Grilon^{®}-Stützfäden bei typischerweise 98 %.

Zwischen den einzelnen Flechtlagen 16 kann ein Faserverbund-Gewebe 17 als Verstärkung mit vorzugsweise 0°, 45° oder 90° Orientierung an den Seitenwänden, d.h. entlang der Längsseiten 8, 9, angeordnet werden und ggf. mit einem Binder fixiert werden. Das Faserverbund-Gewebe 17 besteht wiederum vorzugsweise aus einem unidirektionalen Gewebe bestehend aus Kohlenstoff-, Glas- und/oder Aramid-Fasern.

Fig. 3b zeigt ein weiteres Kernelement, einen sogenannten Verlustkern 21. Der Verlustkern 21 wird ganz analog zu dem in Fig. 3a gezeigten Kernelement 2 hergestellt, wobei jedoch vor dem Umflechten des Schaumkerns 3 dieser mit einer Trennfolie 22, typischerweise einer Teflon^{®}-Folie, umgeben wird. Die Trennfolie 22 dient später dem besseren Trennen der Kernelemente bzw. einzelnen Faserverbundbauteilen, was nachstehend noch genauer erläutert wird.

Die Kernelemente 2 bzw. 21 sind vorteilhafterweise quasi als Endlosmaterial herstellbar, da lange Schaumkerne, d.h. Schaumkerne mit einer Länge von typischerweise 1 m, wie beschrieben beflochten werden. Nach dem Flechten wird der umflochtene Schaumkern vorkompaktiert (d.h. evakuiert bei ca. 100° C) und anschließend auf Maß geschnitten. Die Stirnseiten der Kernelemente werden dann mit Hilfe eines Ultraschallmesser auf den gewünschten Radius bzw. in die gewünschte Form gebracht. Das Bearbeiten mittels Ultraschallmesser hat sich als besonders vorteilhaft erwiesen, da bei anderen Verfahren, beispielsweise beim Ausstanzen, der Schaumkern 3 lokal zusammengedrückt wird, was jedoch die Bauteilgenauigkeit negativ beeinflusst.

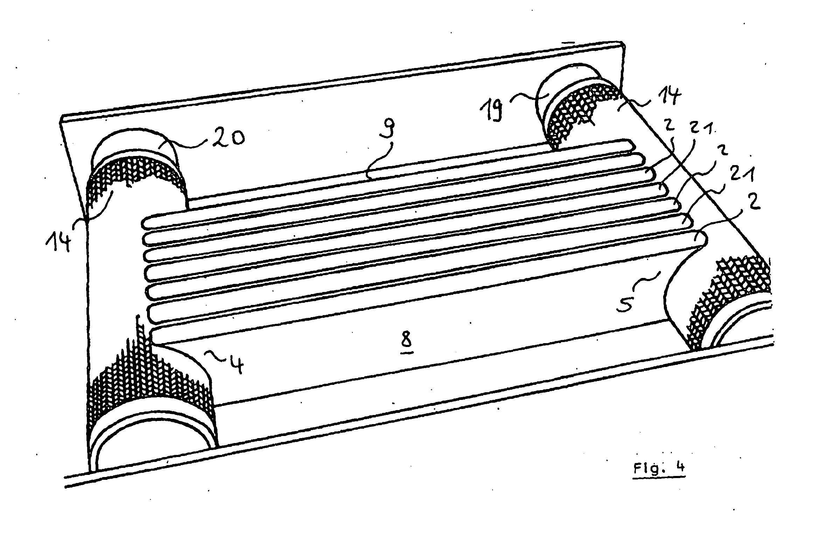

Die vorgefertigten, d.h. vorkompaktierten und geschnittenen Kernelemente 2 bzw. 21 müssen für den abschließenden Flechtvorgang vorbereitet werden. Hierzu werden mehrere derartige Kernelemente unter Verwendung von Halteelementen 19, 20 stapelförmig angeordnet (Fig. 4). Die Halteelemente 19, 20 sind vorzugsweise rohr- oder zylinderförmig ausgebildet und bestehen z.B. aus Aluminium. Die Form bzw. der Radius der Haltelemente 19, 20 entspricht dabei der Form bzw. dem Radius der jeweiligen entsprechenden, konkav ausgebildeten Stirnseite 5 bzw. 4. D.h., die konkav ausgebildete Stirnseite 4 und das Halteelemente 20 sind hinsichtlich ihrer Form aneinander angepasst, ebenso ist die konkav ausgebildete Stirnseite 5 an das Halteelemente 19 formangepasst. Die Durchmesser bzw. die Form der Halteelemente 19, 20 können natürlich auch voneinander verschieden sein, dies bedingt selbstverständlich auch unterschiedliche Krümmungsradien bzw. Formen der Stirnseiten 5 bzw. 4.

Die Haltelemente 19, 20 werden vor dem stapelförmigen Anordnen der Kernelemente mit einem Faserverbundmaterial versehen, vorzugsweise in Form eines aus Kohlenstoff-, Glas- und/oder Aramid-Fasern bestehenden Geschlechtsschlauch 14, der über die Haltelemente 19, 20 stramm aufgezogen wird. Alternativ können die Halteelemente 19, 20 mit derartigen Fasern umwickelt werden. Prepreg-Materialen oder trockene Halbzeuge können aber auch um die Halteelemente 19, 20 gelegt werden. Um eine Faltenbildung des die Halteelemente 19, 20 umgebenden Faserverbund-Gewebes zu vermeiden, ist ein Vorkompaktieren unter Vakuumeinwirkung sowie ggf. ein Voraushärten hilfreich.

Wie in Fig. 4 dargestellt, werden mehrere Kernelemente 2 bzw. 21 derart stapelförmig angeordnet, dass benachbarte Längsseiten 8, 9 der Kernelemente 2 bzw. 21 sich kontaktieren und zugleich die jeweiligen Stirnseiten 4, 5 sich an das entsprechende Halteelement 20 bzw. 19 anschmiegen. In Fig. 4 liegen die konkav ausgebildeten Seitenflächen 4 der Kernelemente 2 bzw. 21 an dem über das Haltelement 20 gezogenen Geflechtsschlauch 14 kontinuierlich an, und die Stirnseiten 5 in entsprechender Weise an dem über das Haltelement 19 gezogenen Geflechtsschlauch 14.

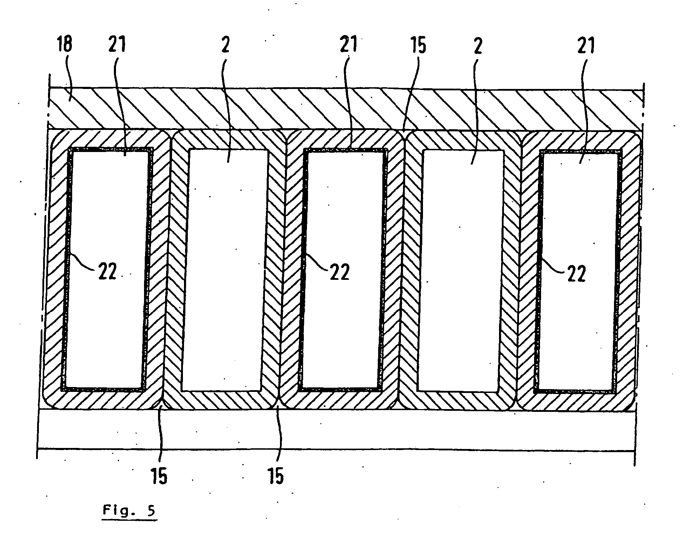

Bei der in Fig. 4 dargestellten Anordnung sind alternierend Kernelemente 2, d.h Kernelemente ohne den Schaumkern 3 umgebende Trennfolie 22, neben Verlustkernen 21 angeordnet. Die Anordnung aus Kernelementen 2, 21 sowie den Halteelementen 19, 20 wird fixiert, was z.B. durch einen entsprechenden Rahmen bzw. Abstandshalter gewährleistet wird. Um einen möglichst bündigen Abschluss mit dem noch aufzuflechtenden Faserverbund-Element 18 zu gewährleisten, können zwischen den einzelnen Kernelementen 2 bzw. 21 im Bereich der Auflagefläche auf den Halteelementen 19 bzw. 20 entsprechende Zwickel 15 angeordnet werden, was in Fig. 5 schematisch dargestellt ist. Selbstverständlich können auch mehrere Kernelemente 2, d.h. Kernelemente ohne den Schaumkern 3 umgebende Trennfolie 22, wie oben beschrieben unter Anlegen an die Halteelemente 19, 20 stapelförmig angeordnet werden, wobei es dann jedoch vorteilhaft ist, zwischen den einzelnen Kernelementen 2 entsprechende Trennfolien 22, die sich entlang der Längsseiten 8, 9 der jeweiligen Kernelemente 2 erstrecken (nicht dargestellt), vorzusehen. Dies erleichtert das spätere Trennen der einzelnen Faserverbundbauteile, was nachstehend noch genauer beschrieben wird.

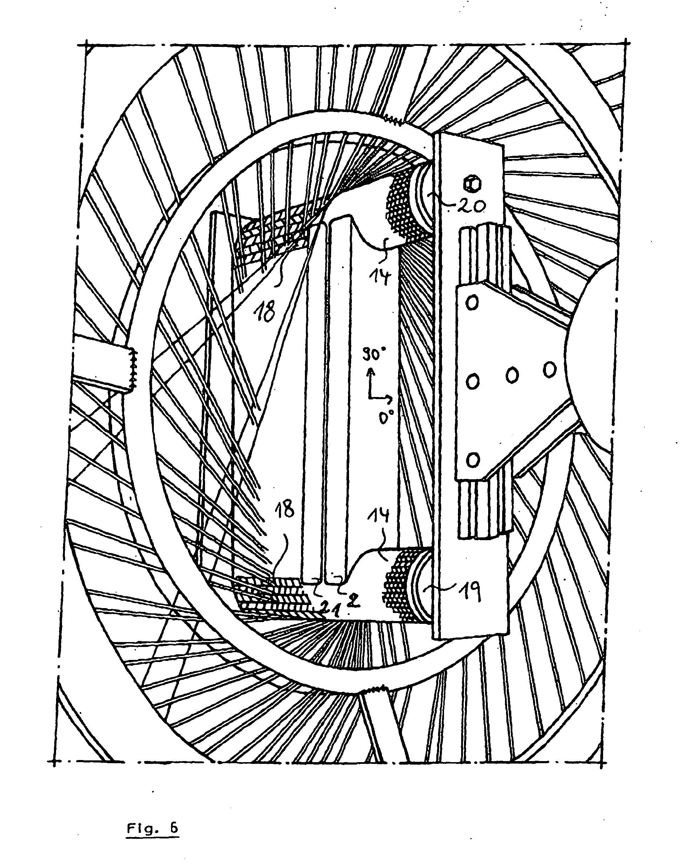

Die zusammengesetzte und fixierte Anordnung aus Kernelementen 2 bzw. 21 und Halteelementen 19, 20 wird anschließend derart in eine Rundflechtmaschine eingespannt, dass die Flechtrichtung mit der Längserstreckung der Halteelemente 19, 20 bzw. mit der Krümmungsachse der Konkavität Aₖ übereinstimmt, wie es in Fig. 6 dargestellt ist. Das Flechten erfolgt wiederum vorzugsweise mit Kohlenstoff-, Glas- und/oder Aramid-Fasern als Verstärkungsfäden und ggf. Grilon^{®}- und/oder Glasfasern als Stützfäden. Dabei ist zu beachten, dass zur Aufnahme von Spannungen in den Fasern ein steiler Flechtwinkel vorteilhaft ist. Bevorzugt beträgt der Winkel bezüglich der Flechtrichtung ±85°, wobei in Fig. 6 nur Flechtwinkel von 0° und 90° zur Orientierung angegeben sind. Wie beim Umflechten der Schaumkerne 3, wird bevorzugt ein unidirektionales Geflecht hergestellt. Die Gesamtdicke der abschließenden Flechtlage, d.h. des Faserverbund-Elements 18, beträgt typischerweise 12 mm. Mit der geschilderten Anordnung ist es möglich, 10 bis 20 Kernelemente gleichzeitig zu umflechten.

Nach dem im Zusammenhang mit Fig. 6 beschriebenen Flechtprozess wird die umflochtene Anordnung - nachfolgend auch als Flechtkörper, Halbzeug oder Preform bezeichnet - infiltriert und ausgehärtet. Zum Aushärten wird typischerweise ein Harz-Vakuuminfiltrations-Verfahren (z.B. RTM oder VAP) verwendet, welches an sich bekannt ist und somit hier nicht weiter beschrieben wird. Die Harzzuleitung kann dabei über zwei Nuten in rohrförmig ausgebildeten Halteelementen erfolgen. Nach dem Aushärten werden die Halteelemente entformt, wobei es hilfreich sein kann, die gesamte Anordnung abzukühlen, da sich die Halteelemente stärker zusammenziehen als der ausgehärtete Flechtkörper.

In einem abschließenden Schritt wird der entformte Flechtkörper mittels Schneiden, Sägen oder Fräsen in einzelne Faserverbundbauteile 1 aufgeteilt. Hierbei hat sich eine Nasskreissäge als besonders nützlich erwiesen. Das Trennen der einzelnen Faserverbundbauteile erfolgt für den Fall, dass Kernelemente 2, welche keine um ihren Schaumkern gewickelte Trennfolie aufweisen, verwendet wurden, derart, dass in Längsrichtung entlang zwei benachbarter Kernelemente 2 geschnitten wird. Insofern Kernelemente 2 alternierend mit Verlustkernen 21 stapelförmig in dem im Zusammenhang mit Fig. 4 beschriebenen Schritt angeordnet wurden, wird jeweils ein Verlustkern 21 mittig in dessen Längsrichtung aufgeschnitten. Hierdurch werden die Verlustkerne 21 geopfert, und aufgrund der Ummantelung des Schaumkerns 3 mit Trennfolie 22 können die Faserverbundbauteile 1, die jeweils ein Kernelement 2 aufweisen, leicht voneinander getrennt werden. In einem abschließenden Schritt können die einzelnen Faserverbundbauteile 1 auf ein gewünschtes Endmaß zugeschnitten werden. Auch die Durchgangsöffnungen 12, 13 können auf Maß z.B. für ein aufzunehmendes Lager gefräst werden.

Die oben dargelegte Erfindung weist den Vorteil auf, dass die Faserverbundbauteile entsprechend ihrer Zug- und Druckbelastung ausgelegt sind. Dabei kann die Druckkräfte aufnehmende Komponente, d.h. das Kernelement, in Sandwich-Bauweise mit geringem Gewicht ausgebildet werden, und das schlaufenförmig ausgebildete, geflochtene Faserverbund-Element ist zur Aufnahme von Zugkräften optimiert. Da die Kernelemente quasi als Endlosmaterial vorgefertigt und auf Maß geschnitten werden können, wird eine höhere Effektivität erzielt, da nicht jedes Kernelement individuell gefertigt werden muss. Eine weitere Effektivitätssteigerung ergibt sich dadurch, dass mehrere Kernelemente gleichzeitig umflochten und damit mehrere Faserverbund-Elemente gleichzeitig hergestellt werden, die abschließend durch einfaches Trennen mittels Schneiden, Sägen oder Fräsen voneinander separiert werden. Durch die Faserverbundbauweise ergibt sich ein großes Gewichtseinsparungspotenzial, das hier typischerweise bei 40 % im Vergleich zu entsprechenden metallischen Strukturen liegt.

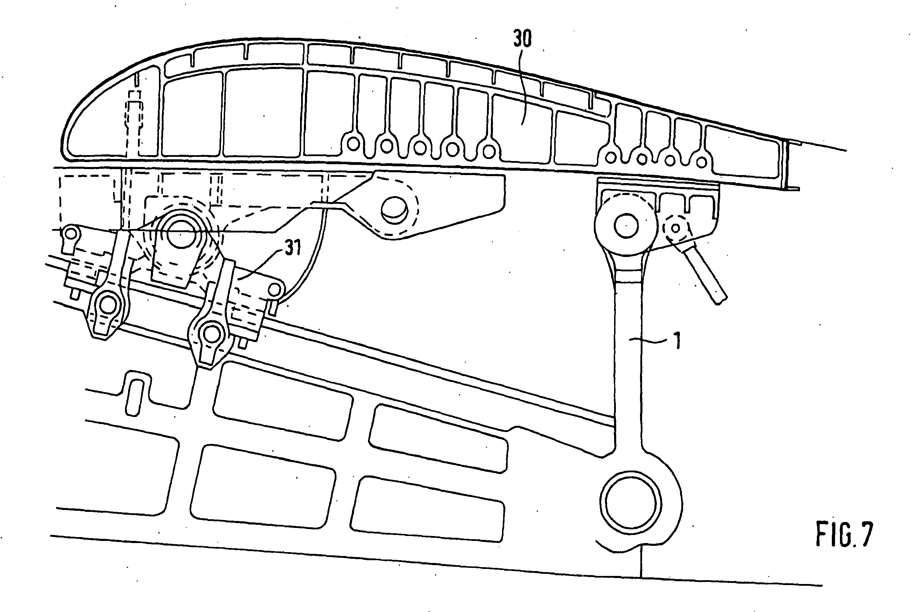

Fig. 7 zeigt abschließend ein konkretes Anwendungsbeispiel, bei dem das erfindungsgemäße Faserverbundbauteil als Pendelstütze zur Lagerung der äußeren Landeklappe beim Airbus A340 dient. Die Lagerung der Landeklappe 30 besteht aus einem Wagen 31 (engl. "flap track carriage"), der auf einer Schiene nach hinten fährt, und einer Pendelstütze 1, die hinten an der Schiene montiert ist. Über diese Lagerung werden alle Kräfte auf den Flügel übertragen.

### Bezugszeichenliste

- 1: Faserverbundbauteil
- 2: Kernelement bzw. Druckstück
- 3: Schaumkern
- 4: Stirnseite des Kernelements
- 5: Stirnseiten des Kernelements
- 6: Querseite des Kernelements
- 7: Querseite des Kernelements
- 8: Längsseite des Kernelements
- 9: Längsseite des Kernelements
- 10: Innenelement
- 11: Innenelement
- 12: Durchgangsöffnung
- 13: Durchgangsöffnung
- 14: Faserverbundmaterial bzw. Faserverbund-Schlauch
- 15: Zwickel
- 16: Flechtlage
- 17: Faserverbund-Gewebe
- 18: Faserverbund-Element bzw. Schlaufenteil
- 19: Halteelement
- 20: Halteelement
- 21: Kernelement bzw. Verlustkern
- 22: Trennfolie
- 30: Landeklappe
- 31: Wagen
- Aₖ: Krümmungsradius der Konkavität
- H: Höhe des Kernelements

## Patentansprüche

1. Faserverbundbauteil, insbesondere eine Zug/Druck-Strebe, umfassend:
- ein Kernelement (2), welches zumindest eine konkav ausgebildete Stirnseite (4, 5) aufweist;
- wobei sich an die zumindest eine konkav ausgebildete Stirnseite (4, 5) des Kernelements (2) eine Durchgangsöffnung (12 bzw. 13) anschließt; und
- wobei jeweils gegenüberliegende Quer- (6, 7) oder Längsseiten (8, 9) des Kernelements (2) und die nicht von dem Kernelement (2) begrenzte Seite der Durchgangsöffnung (12, 13) schlaufenartig von einem Faserverbund-Element (18) umschlossen sind, wobei
das Faserverbund-Element (18) ein in einer Richtung senkrecht zu den Quer- (6, 7) oder Längsseiten (8, 9) geflochtenes Faserverbund-Element ist.

2. Faserverbundbauteil nach Anspruch 1, **dadurch gekennzeichnet, dass**
- die konkav ausgebildete Stirnseite (4, 5) einen vorgegebenen Krümmungsradius aufweist,
- die Durchgangsöffnung (12 bzw, 13) im Wesentlichen kreisförmig ausgebildet ist; und
- das geflochtene Faserverbund-Element (18) das Kernelement (2) und die Krümmungsachse der Konkavität (Aₖ) schlaufenartig umgibt.

3. Faserverbundbauteil nach Anspruch 1 oder 2, **dadurch gekennzeichnet, dass** sich an die zumindest eine konkav ausgebildete Stirnseite (4, 5) des Kernelements (2) ein Innenelement (10 bzw. 11) zur Bildung der Durchgangsöffnung (12 bzw. 13) formangepasst anschließt, wobei das Kernelement (2) und die Außenumfangsfläche des Innenelements (10, 11) schlaufenartig von dem geflochtenen Faserverbund-Element (18) umschlossen sind.

4. Faserverbundbauteil nach Anspruch 3, **dadurch gekennzeichnet, dass** das Innenelement (10, 11) aus einem Faserverbundmaterial, insbesondere einem geflochtenen Faserverbundschlauch-Abschnitt besteht.

5. Faserverbundbauteil nach Anspruch 4, **dadurch gekennzeichnet, dass** der Faserverbundschlauch-Abschnitt im Wesentlichen aus Kohlenstoff-, Glas- und/oder Aramid-Fasem besteht.

6. Faserverbundbauteil nach einem der Ansprüche 2 bis 5, **dadurch gekennzeichnet, dass** das Kernelement (2) im Wesentlichen quaderförmig ausgebildet ist und entsprechende Querseiten (6, 7) und Längsseiten (8, 9) aufweist, wobei die Krümmungsachse der Konkavität (Aₖ) senkrecht zu den Längsseiten (8, 9) verläuft.

7. Faserverbundbauteil nach einem der Ansprüche 1 bis 6, **dadurch gekennzeichnet, dass** das Kernelement (2) einen Schaumkem (3) aufweist, der unter Bildung einzelner Flechtlagen (16) umflochten ist.

8. Faserverbundbauteil nach Anspruch 7, **dadurch gekennzeichnet, dass** die Flechtlagen (16) den Querschnitt des Schaumkerns (3) im Wesentlichen konzentrisch umschließen.

9. Faserverbundbauteil nach Anspruch 7 oder 8, **dadurch gekennzeichnet, dass** der Schaumkern (3) unter Flechtwinkeln von ±45° umflochten ist

10. Faserverbundbauteil nach einem der Ansprüche 7 bis 9. **dadurch gekennzeichnet, dass** zumindest entlang der Längsseiten (8, 9) des Kernelements (2) zwischen den einzelnen Flechtlagen (16) Faserverbund-Gewebe (17) angeordnet sind.

11. Faserverbundbauteil nach Anspruch 7 bis 10, **dadurch gekennzeichnet, dass** die Flechtlagen (16) im Wesentlichen aus Kohlenstoff-, Glas- und/oder Aramid-Fasern bestehen.

12. Faserverbundbauteil nach Anspruch 10 oder 11, **dadurch gekennzeichnet, dass** das Faserverbund-Gewebe (17) im Wesentlichen aus Kohlenstoff-, Glas- und/oder Aramid-Fasem besteht

13. Faserverbundbauteil nach einem der Ansprüche 1 bis 6, **dadurch gekennzeichnet, dass** das Kernelement (2) aus zugeschnittenen und gestapelten Prepreg-Lagen oder trockenen Halbzeugen besteht.

14. Faserverbundbauteil nach Anspruch 1, **dadurch gekennzeichnet, dass** das Faserverbund-Element (18) im Wesentlichen aus Kohlenstoff-, Glas- und/oder Aramid-Fasem besteht.

15. Verfahren zum Herstellen von Faserverbundbauteilen, insbesondere von Zug/Druck-Streben, umfassend die Schritte:
- Bereitstellen von Kernelementen (2; 2, 21), die jeweils zumindest eine konkav ausgebildete Stirnseite (4, 5) aufweisen;
- Bereitstellen zumindest eines Halteelements (19, 20), wobei die jeweils zumindest eine konkav ausgebildete Stirnseite (4, 5) an die Form eines entsprechenden Halteelements (20 bzw. 19) angepasst ist;
- stapelförmiges Anordnen von mehreren Kernelementen (2; 2, 21), wobei die jeweils zumindest eine konkav ausgebildete Stirnseite (4, 5) unter Anschmiegen an das entsprechende Halteelement (20 bzw. 19) an dieses angelegt wird:
- Fixieren der Anordnung aus stapelförmig angeordneten Kernelementen (2; 2, 21) und dem zumindest einen Halteelement (19, 20) ggf. mittels Abstandshalter;
- Umflechten der fixierten Anordnung zur Bildung eines die Kernelemente (2; 2, 21) und das zumindest eine Haltelement (19, 20) schlaufenartig umschließenden Faserverbund-Elements (18);
- Infiltrieren und Aushärten der umflochtenen Anordnung;
- anschließendes Entformen des zumindest einen Haltelements (19, 20) ggf. mittels Kälteeinwirkung und Trennen der umflochtenen, gestapelten Kernelemente (2: 2, 21) mittels Schneiden, Sägen oder Fräsen.

16. Verfahren nach Anspruch 15, **dadurch gekennzeichnet, dass** vor dem stapelförmigen Anordnen der Kernelemente (2; 2, 21) das zumindest eine Haltelement (19, 20) mit Faserverbundmaterial überzogen wird, so dass beim stapelförmigen Anordnen der Kernelemente (2; 2, 21) sich die jeweils zumindest eine konkav ausgebildete Stirnseite (4, 5) an das Faserverbundmaterial des entsprechenden Halteelements (20 bzw. 19) schmiegt.

17. Verfahren nach Anspruch 15 oder 16, **dadurch gekennzeichnet, dass** als Faserverbundmaterial ein geflochtener Faserverbund-Schlauch (14), im Wesentlichen bestehend aus Kohlenstoff-, Glas- und/oder Aramid-Fasem, verwendet wird.

18. Verfahren nach Anspruch 16 oder 17, **dadurch gekennzeichnet, dass** das Faserverbundmaterial nach dem Aufbringen auf das zumindest eine Haltelement (19, 20) kompaktiert und ggf. vorausgehärtet wird.

19. Verfahren nach einem der Ansprüche 16 bis 18, **dadurch gekennzeichnet, dass** im Wesentlichen quaderförmige Kernelemente (2, 21) verwendet werden, die entsprechende Querseiten (6, 7) und Längsseiten (8, 9) aufweisen, wobei die zumindest eine Stirnseite (4, 5) derart bearbeitet wird, dass sie nach innen gekrümmt ist, wobei die Krümmungsachse der Konkavität (Aₖ) senkrecht zu den Längsseiten (8, 9) verläuft.

20. Verfahren nach einem der Ansprüche 15 bis 19, **dadurch gekennzeichnet, dass** Kernelemente (2, 21) verwendet werden, die einen Schaumkern (3) aufweisen, wobei der Schaumkern (3) unter Bildung einzelner Flechtlagen (16) umflochten und anschließend kompaktiert wird.

21. Verfahren nach Anspruch 20, **dadurch gekennzeichnet, dass** der Schaumkern (3) derart umflochten wird, dass der Querschnitt des Schaumkerns (3) im Wesentlichen konzentrisch von den Flechtlagen (16) umschlossen wird.

22. Verfahren nach Anspruch 20 oder 21, **dadurch gekennzeichnet, dass** der Schaumkern (3) unter Flechtwinkeln von ±45° umflochten wird.

23. Verfahren nach einem der Ansprüche 19 bis 22, **dadurch gekennzeichnet, dass** zumindest auf den Längsseiten (8, 9) des Kernelements (2, 21) zwischen den einzelnen Flechtlagen (16) Faserverbund-Gewebe (17) angeordnet werden.

24. Verfahren nach einem der Ansprüche 19 bis 23, **dadurch gekennzeichnet, dass** Kernelemente (20) hergestellt werden, bei denen der Schaumkern (3) vor dem Umflechten mit einer Trennfolie (22) umgeben wird.

25. Verfahren nach einem der Ansprüche 15 bis 23, **dadurch gekennzeichnet, dass** beim stapelförmigen Anordnen der Kernelemente (2) Trennfolien zwischen benachbarten Kernelementen (2) angeordnet werden.

26. Verfahren nach einem der Ansprüche 15 bis 25, **dadurch gekennzeichnet, dass** das Umflechten der fixierten Anordnung aus stapelförmig angeordneten Kemelementen (2; 2, 21) und dem zumindest einen Halteelement (19, 20) in Längsrichtung des zumindest einen Halteelements (19, 20) erfolgt.

27. Verfahren nach Anspruch 26, **dadurch gekennzeichnet, dass** das Umflechten unter Flechtwinkeln von ±85° bezüglich der Längsrichtung des zumindest einen Halteelements (19, 20) durchgeführt wird.

28. Verfahren nach Anspruch 26 oder 27, **dadurch gekennzeichnet, dass** beim Umflechten im Wesentlichen Kohlenstoff-, Glas- und/oder Aramid-Faser verwendet werden.

29. Verfahren nach einem der Ansprüche 15 bis 28, **dadurch gekennzeichnet, dass** das Infiltrieren der umflochtenen Anordnung mittels Harz-Vakuuminfiltrations-Verfahren durchgeführt wird, und die Anordnung anschließend ausgehärtet wird.

30. Verwendung des Faserverbundbauteils gemäß einem der Ansprüche 1 bis 14 als Verbindungselement, Zug/Druck-Strebe, Pendelstück oder Querlenker in der Luft- und Raumfahrttechnik sowie in der Kraftfahrzeugtechnik.

31. Verwendung des Faserverbundbauteils gemäß einem der Ansprüche 1 bis 14 zur Lagerung von Landeklappen in Luftfahrzeugen.

32. Luftfahrzeug mit einem Faserverbundbauteil gemäß einem der Ansprüche 1 bis 14 zur Lagerung von Landeklappen.

33. Luftfahrzeug mit zumindest einem Faserverbundbauteil, welches unter Verwendung des Verfahrens gemäß einem der Ansprüche 15 bis 29 hergestellt worden ist.

## Claims

1. Fibre composite component, in particular a tension/compression strut, comprising:
- a core element (2) which comprises at least one concavely formed front side (4, 5);
- wherein the at least one concavely formed front side (4, 5) of the core element (2) is adjoined by a through opening (12 or 13); and
- wherein respectively opposite transverse (6, 7) or longitudinal sides (8, 9) of the core element (2) and the side of the through opening (12, 13) not delimited by the core element (2) are enclosed by a fibre composite element (18) in a loop-like manner, wherein the fibre composite element (18) is a fibre composite element which is braided in a direction perpendicularly to the transverse (6, 7) or longitudinal sides (8, 9).

2. Fibre composite component according to Claim 1, **characterized in that**
- the concavely formed front side (4, 5) has a predefined radius of curvature;
- the through opening (12 or 13) is configured to be substantially circular; and
- the braided fibre composite element (18) surrounds the core element (2) and the axis of curvature of the concavity (Aₖ) in a loop-like manner.

3. Fibre composite component according to Claim 1 or 2, **characterized in that** the at least one concavely formed front side (4, 5) of the core element (2) is adjoined by an inner element (10 or 11) to form the through opening (12 or 13) in a form-matched manner, wherein the core element (2) and the outer circumferential surface of the inner element (10, 11) are enclosed in a loop-like manner by the braided fibre composite element (18).

4. Fibre composite component according to Claim 3, **characterized in that** the inner element (10, 11) consists of a fibre composite material, in particular a braided fibre composite tubular section.

5. Fibre composite component according to Claim 4, **characterized in that** Fibre composite tubular section substantially consists of carbon, glass and/or aramide fibres.

6. Fibre composite component according to one of Claims 2 to 5, **characterized in that** the core element (2) is configured to be substantially rectangular and has corresponding transverse sides (6, 7) and longitudinal sides (8, 9), wherein the axis of curvature of the concavity (Aₖ) runs perpendicularly to the longitudinal sides (8, 9).

7. Fibre composite component according to one of Claims 1 to 6, **characterized in that** the core element (2) comprises a foam core (3) which is braided to form individual braiding layers (16).

8. Fibre composite component according to Claim 7, **characterized in that** the braiding layers (16) substantially concentrically enclose the cross section of the foam core (3).

9. Fibre composite component according to Claim 7 or 8, **characterized in that** the foam core (3) is braided at braiding angles of ±45°.

10. Fibre composite component according to one of Claims 7 to 9, **characterized in that** fibre composite fabrics (17) are arranged at least along the longitudinal sides (8, 9) of the core element (2) between the individual braiding layers (16).

11. Fibre composite component according to Claims 7 to 10, **characterized in that** the braiding layers (16) substantially consist of carbon, glass and/or aramide fibres.

12. Fibre composite component according to Claim 10 or 11, **characterized in that** the fibre composite fabric (17) substantially consists of carbon, glass and/or aramide fibres.

13. Fibre composite component according to one of Claims 1 to 6, **characterized in that** the core element (2) consists of trimmed and stacked prepreg layers or dry semi-finished products.

14. Fibre composite component according to Claim 1, **characterized in that** the fibre composite element (18) substantially consists of carbon, glass and/or aramide fibres.

15. Method for manufacturing fibre composite components, in particular tension/compression struts, comprising the steps:
- preparing core elements (2; 2, 21) each having at least one concavely formed front side (4, 5);
- preparing at least one retaining element (19, 20), wherein the respectively at least one concavely formed front side (4, 5) is adapted to the shape of a corresponding retaining element (20 or 19);
- arranging a plurality of core elements (2; 2, 21) in stacks, wherein the respectively at least one concavely formed front side (4, 5) is abutted against the corresponding retaining element (20 or 19) so that it nestles against said element;
- fixing the arrangement of core elements (2; 2, 21) arranged in stacks and the at least one retaining element (19, 20) optionally by means of spacers;
- braiding the fixed arrangement to form a fibre composite element (18) which surrounds the core elements (2; 2, 21) and the at least one retaining element (19, 20) in a loop-like manner;
- infiltrating and curing the braided arrangement;
- subsequently demoulding the at least one retaining element (19, 20) optionally by means of the action of cold conditions and separating the braided, stacked core elements (2; 2, 21) by means of cutting, sawing or milling.

16. Method according to Claim 15, **characterized in that,** prior to the stacked arrangement of the core elements (2; 2, 21), the at least one retaining element (19, 20) is covered with fibre composite material so that, during the stacked arrangement of the core elements (2; 2, 21), the respectively at least one concavely formed front side (4, 5) nestles against the fibre composite material of the corresponding retaining element (20 or 19).

17. Method according to Claim 15 or 16, **characterized in that** a braided fibre composite tube (14), substantially consisting of carbon, glass and/or aramide fibres, is used as fibre composite material.

18. Method according to Claim 16 or 17, **characterized in that** the fibre composite material is compacted and optionally pre-cured after application to the at least one retaining element (19, 20).

19. Method according to one of Claims 16 to 18, **characterized in that** substantially rectangular core elements (2, 21) are used, having corresponding transverse sides (6, 7) and longitudinal sides (8, 9), wherein the at least one front side (4, 5) is processed in such a manner that it is inwardly curved, wherein the axis of curvature of the concavity (Aₖ) runs perpendicularly to the longitudinal sides (8, 9).

20. Method according to one of Claims 15 to 19, **characterized in that** core elements (2, 21) having a foam core (3) are used, wherein the foam core (3) is braided to form individual braiding layers (16) and then compacted.

21. Method according to Claim 20, **characterized in that** the foam core (3) is braided in such a manner that the cross section of the foam core (3) is surrounded substantially concentrically by the braiding layers (16).

22. Method according to Claim 20 or 21, **characterized in that** the foam core (3) is braided at braiding angles of ±45°.

23. Method according to one of Claims 19 to 22, **characterized in that** fibre composite fabrics (17) are arranged at least on the longitudinal sides (8, 9) of the core element (2, 21) between the individual braiding layers (16).

24. Method according to one of Claims 19 to 23, **characterized in that** core elements (20) are manufactured in which the foam core (3) is surrounded with a separating film (22) before the braiding.

25. Method according to one of Claims 15 to 23, **characterized in that** separating films are arranged between adjacent core elements (2) during the stacked arrangement of the core elements (2).

26. Method according to one of Claims 15 to 25, **characterized in that** the braiding of the fixed arrangement of core elements (2; 2, 21) arranged in stacks and the at least one retaining element (19, 20) is effected in the longitudinal direction of the at least one retaining element (19, 20).

27. Method according to Claim 26, **characterized in that** the braiding is carried out at braiding angles of ±85° relative to the longitudinal direction of the at least one retaining element (19, 20).

28. Method according to Claim 26 or 27, **characterized in that** substantially carbon, glass and/or aramide fibres are used during the braiding.

29. Method according to one of Claims 15 to 28, **characterized in that** the infiltration of the braided arrangement is carried out by means of a resin vacuum infiltration method and the arrangement is then cured.

30. Use of the fibre composite component according to one of Claims 1 to 14 as a connecting element, tension/compression strut, rear link or transverse link in air and space travel technology and in motor vehicle technology.

31. Use of the fibre composite component according to one of Claims 1 to 14 for the mounting of landing flaps in aircraft.

32. Aircraft having a fibre composite component according to one of Claims 1 to 14 for the mounting of landing flaps.

33. Aircraft having at least one fibre composite component which has been produced using the method according to one of Claims 15 to 29.

## Revendications

1. Composant en composite de fibres, en particulier étai de traction/compression, qui comprend :
- un élément d'âme (2) qui présente au moins un côté frontal (4, 5) de configuration concave,
- une ouverture de passage (12 ou 13) qui se raccorde au côté frontal ou aux côtés frontaux (4, 5) de configuration concave de l'élément d'âme (2),
- les côtés transversaux (6, 7) opposés ou les côtés longitudinaux (8, 9) opposés de l'élément d'âme (2) et le côté de l'ouverture de passage (12, 13) non délimité par l'élément d'âme (2) étant entourés par un élément (18) en composite de fibres en forme de manchon,
l'élément (18) en composite de fibres étant un élément en composite de fibres tressé dans une direction perpendiculaire aux côtés transversaux (6, 7) ou aux côtés longitudinaux (8, 9).

2. Composant en composite de fibres selon la revendication 1, **caractérisé en ce que** le côté frontal (4, 5) de configuration concave présente un rayon de courbure prédéterminé,
- **en ce que** l'ouverture de passage (12 ou 13) a une configuration essentiellement circulaire et
- **en ce que** l'élément (18) en composite de fibres tressé entoure à la manière d'un manchon l'élément d'âme (2) et l'axe de courbure (Aₖ) de la concavité.

3. Composant en composite de fibres selon les revendications 1 ou 2, **caractérisé en ce qu'**un élément intérieur (10 ou 11) s'adapte au côté frontal ou aux côtés frontaux (4, 5) de configuration concave de l'élément d'âme (2) en épousant leur surface de manière à former l'ouverture de passage (12 ou 13), l'élément d'âme (2) et la surface périphérique extérieure de l'élément intérieur (10, 11) étant entourés par l'élément (18) en composite de fibres tressé en manchon.

4. Composant en composite de fibres selon la revendication 3, **caractérisé en ce que** l'élément intérieur (10, 11) est constitué d'un matériau en composite de fibres, en particulier un tronçon tressé de manchon en composite de fibres.

5. Composant en composite de fibres selon la revendication 4, **caractérisé en ce que** le tronçon de manchon en composite de fibres est essentiellement constitué de fibres de carbone, de fibres de verre et/ou de fibres d'aramide.

6. Composant en composite de fibres selon l'une des revendications 2 à 5, **caractérisé en ce que** l'élément d'âme (2) a essentiellement la configuration d'un parallélépipède et présente des côtés transversaux (6, 7) et des côtés longitudinaux (8, 9) correspondants, l'axe de courbure (Aₖ) de la concavité s'étendant perpendiculairement aux côtés longitudinaux (8, 9).

7. Composant en composite de fibres selon l'une des revendications 1 à 6, **caractérisé en ce que** l'élément d'âme (2) présente une âme en mousse (3) entourée par un treillis tressé en formant différentes couches tressées (16).

8. Composant en composite de fibres selon la revendication 7, **caractérisé en ce que** les couches tressées (16) entourent de manière essentiellement concentrique la section transversale de l'âme en mousse (3).

9. Composant en composite de fibres selon les revendications 7 ou 8, **caractérisé en ce que** l'âme en mousse (3) est entourée d'un treillis tressé formé à un angle de tressage de ± 45°.

10. Composant en composite de fibres selon l'une des revendications 7 à 9, **caractérisé en ce que** des tissus (17) en composite de fibres sont disposés au moins le long des côtés longitudinaux (8, 9) de l'élément d'âme (2) entre les différentes couches tressées (16).

11. Composant en composite de fibres selon les revendications 7 à 10, **caractérisé en ce que** les couches tressées (16) sont constituées essentiellement de fibres de carbone, de fibres de verre et/ou de fibres d'aramide.

12. Composant en composite de fibres selon les revendications 10 ou 11, **caractérisé en ce que** le tissu (17) en composite de fibres est constitué essentiellement de fibres de carbone, de fibres de verre et/ou de fibres d'aramide.

13. Composant en composite de fibres selon l'une des revendications 1 à 6, **caractérisé en ce que** l'élément d'âme (2) est constitué de couches découpées et empilées de préimprégnés ou d'ébauches séchées.

14. Composant en composite de fibres selon la revendication 1, **caractérisé en ce que** l'élément (18) en composite de fibres est constitué essentiellement de fibres de carbone, de fibres de verre et/ou de fibres d'aramide.

15. Procédé de fabrication de composants en composite de fibres, en particulier d'étais de traction/compression, lequel procédé présente les étapes qui consistent à :
- préparer des éléments d'âme (2; 2, 21) qui présentent tous au moins un côté frontal (4, 5) de configuration concave,
- préparer au moins un élément de maintien (19, 20), le ou les côtés frontaux (4, 5) de configuration concave étant adaptés à la forme d'un élément de maintien (20 ou 19) correspondant,
- disposer en empilement plusieurs éléments d'âme (2; 2, 21), le ou les côtés frontaux (4, 5) de configuration concave étant placés sur l'élément de maintien (20 ou 19) correspondant de manière à en épouser la surface,
- fixer le système d'éléments d'âme (2, 2; 21) disposés en piles et le ou les éléments de maintien (19, 20), éventuellement au moyen d'écarteurs,
- tresser un treillis autour du système fixé de manière à former un élément (18) en composite de fibres qui entoure en manchon les éléments d'âme (2; 2, 21) et le ou les éléments de maintien (19, 20),
- imprégner et durcir le système entouré de son treillis tressé,
- ensuite, démouler le ou les éléments de maintien (19, 20), éventuellement par action du froid, et découper par découpe, sciage ou fraisage les éléments d'âme (2; 2, 21) empilés et entourés d'un treillis tressé.

16. Procédé selon la revendication 15, **caractérisé en ce qu'**avant d'agencer en empilement les éléments d'âme (2; 2, 21), le ou les éléments de maintien (19, 20) sont recouverts du matériau en composite de fibres de telle sorte que lorsque les éléments d'âme (2; 2, 21) sont disposés en empilement, le ou les côtés frontaux (4, 5) de configuration concave épousent le matériau en composite de fibres de l'élément de maintien (20 ou 19) correspondant.

17. Procédé selon les revendications 15 ou 16, **caractérisé en ce que** comme matériau en composite de fibres, on utilise un manchon (14) en composite de fibres tressé, essentiellement constitué de fibres de carbone, de fibres de verre et/ou de fibres d'aramide.

18. Procédé selon les revendications 16 ou 17, **caractérisé en ce qu'**après avoir été appliqué sur le ou les éléments de maintien (19, 20), le matériau en composite de fibres est compacté et éventuellement pré-durci.

19. Procédé selon l'une des revendications 16 à 18, **caractérisé en ce que** l'on utilise des éléments d'âme (2, 21) configurés essentiellement en parallélépipèdes qui présentent des côtés transversaux (6, 7) et des côtés longitudinaux (8, 9) qui se correspondent, le ou les côtés frontaux (4, 5) étant usinés de manière à être cintrés vers l'intérieur, l'axe de courbure (Aₖ) de la concavité s'étendant perpendiculairement aux côtés longitudinaux (8, 9).

20. Procédé selon l'une des revendications 15 à 19, **caractérisé en ce que** l'on utilise des éléments d'âme (2, 21) qui présentent une âme en mousse (3), l'âme en mousse (3) étant entourée d'un treillis tressé en formant différentes couches tressées (16) et étant ensuite compactée.

21. Procédé selon la revendication 20, **caractérisé en ce que** l'âme en mousse (3) est entourée d'un treillis tressé de telle sorte que la section transversale de l'âme en mousse (3) soit entourée de manière essentiellement concentrique par des couches tressées (16).

22. Procédé selon les revendications 20 ou 21, **caractérisé en ce que** l'âme en mousse (3) est entourée d'un treillis tressé sous un angle de tressage de ± 45°.

23. Procédé selon l'une des revendications 19 à 22, **caractérisé en ce qu'**au moins sur les côtés longitudinaux (8, 9) de l'élément d'âme (2, 21), des tissus (17) en composite de fibres sont disposés entre les différentes couches tressées (16).

24. Procédé selon l'une des revendications 19 à 23, **caractérisé en ce que** l'on fabrique des éléments d'âme (20) dont l'âme en mousse (3) est entourée d'une feuille de séparation (22) avant d'être entourée par un treillis tressé.

25. Procédé selon l'une des revendications 15 à 23, **caractérisé en ce que** lorsque les éléments d'âme (2) sont disposés en empilement, des feuilles de séparation sont disposées entre les éléments d'âme (2) voisins.

26. Procédé selon l'une des revendications 15 à 25, **caractérisé en ce que** le système fixé constitué des éléments d'âme (2; 2, 21) disposés en empilement et du ou des éléments de maintien (19, 20) est entouré par un treillis tressé dans le sens de la longueur du ou des éléments de maintien (19, 20).

27. Procédé selon la revendication 26, **caractérisé en ce que** la pose du treillis tressé est réalisée à un angle de tressage de ± 85° par rapport au sens de la longueur du ou des éléments de maintien (19, 20).

28. Procédé selon les revendications 26 ou 27, **caractérisé en ce que** le tressage s'effectue essentiellement en fibres de carbone, de fibres de verre et/ou de fibres d'aramide.

29. Procédé selon l'une des revendications 15 à 28, **caractérisé en ce que** l'imprégnation du système entouré d'un treillis tressé est réalisée au moyen d'un procédé d'imprégnation sous vide par une résine, le système étant ensuite durci.

30. Utilisation du composant en composite de fibres selon l'une des revendications 1 à 14 comme élément de liaison, étai de traction/compression, pièce pendulaire ou bielle transversale en technique aérospatiale ainsi qu'en technique automobile.

31. Utilisation du composant en composite de fibres selon l'une des revendications 1 à 14 pour le montage de volets de trains d'atterrissage d'aéronefs.

32. Aéronef doté d'un composant en composite de fibres selon l'une des revendications 1 à 14 pour le montage de volets de trains d'atterrissage.

33. Aéronef comportant au moins un composant en composite de fibres fabriqué en recourant au procédé selon l'une des revendications 15 à 29.
